# FASCICULE DE BREVET EUROPEEN

(11) **EP 3 705 425 B1**
(45) Date de publication et mention de la délivrance du brevet: **22.03.2023**
(21) Numéro de dépôt: 20161305.6
(22) Date de dépôt: 05.03.2020
(51) Int. Cl.: B65G 15/60

(54) **CONVOYEUR À BANDE À MOTORISATION RÉPARTIE, ET PROCÉDÉ DE TRANSPORT DE MATÉRIAUX ASSOCIÉ**
BANDFÖRDERER MIT VERTEILTER MOTORISIERUNG, UND ENTSPRECHENDES MATERIALTRANSPORTVERFAHREN
CONVEYOR BELT WITH DISTRIBUTED DRIVE, AND ASSOCIATED METHOD FOR TRANSPORTING MATERIALS

(30) Priorité: 06.03.2019 FR 1902294
(43) Date de publication de la demande: 09.09.2020
(73) Titulaire: Brunone, René, 27950 Saint Marcel (FR)
(72) Inventeur: Brunone, René, 27950 Saint Marcel (FR)
(74) Mandataire: Lavoix

(56) Documents cités:
- WO-A1-2016/094033
- DE-A1- 19 639 091
- Anonymous: "VICAT - Brunone", , 14 janvier 2020 (2020-01-14), XP055657622, Extrait de l'Internet: URL:http://www.brunone.fr/portfolio/vicat/ [extrait le 2020-01-14]
- BRUNONE INNOVATION: "Convoyeur TECHMI Lg 6250 m", YouTube, 10 juillet 2015 (2015-07-10), pages 1-3, XP054980099, Extrait de l'Internet: URL:https://www.youtube.com/watch?v=IKzHRb Au8RY&feature=emb_logo [extrait le 2020-01-14]

## Description

La présente invention concerne un convoyeur à bande, du type comportant :
- une bande transporteuse configurée pour se déplacer suivant une direction longitudinale, la bande transporteuse présentant deux grandes faces, et
- une pluralité de stations de support réparties longitudinalement le long de la bande transporteuse, les stations de support étant configurées pour soutenir la bande transporteuse par une des grandes faces.

Un tel convoyeur est notamment utilisé pour transporter des matériaux divisés, par exemple des minerais. Un moteur d'entraînement est configuré pour entraîner une bande transporteuse suivant une direction longitudinale de celle-ci. De tels convoyeurs sont connus de l'état de la technique notamment de WO 2016/094033 qui divulgue les caractéristiques techniques contenues dans le préambule de la revendication 1.

Pour transporter une masse de matériaux élevée, il est nécessaire d'augmenter la puissance du moteur d'entraînement. Ceci augmente sensiblement la tension dans la bande transporteuse à l'endroit où le moteur d'entraînement exerce une force d'entraînement sur la bande-transporteuse.

De plus, lorsque ce moteur d'entraînement est en panne, la bande transporteuse est obligée à s'arrêter jusqu'à ce que ce moteur d'entraînement soit réparé.

En outre, un tel convoyeur est souvent alimenté par un réseau électrique. La connexion électrique entre le convoyeur et le réseau électrique est toutefois compliquée à réaliser.

Un des buts de l'invention est de proposer un convoyeur dont la bande transporteuse est soumise à une tension réduite, dont la maintenance est facilitée, et dont l'alimentation est simplifiée.

A cet effet, l'invention a pour objet un convoyeur à bande selon le contenu de la revendication 1.

Dans des modes de réalisation particuliers de l'invention, le convoyeur à bande présente en outre l'une ou plusieurs des caractéristiques suivantes, prise(s) isolément ou suivant toute(s) combinaison(s) techniquement possible(s) :
- au moins une station de support comprend au moins un organe d'entraînement de la bande transporteuse, par exemple un rouleau, l'organe d'entraînement étant entraîné en rotation par le moteur d'entraînement et étant en contact direct avec la bande transporteuse de sorte à entraîner le déplacement de la bande transporteuse suivant la direction longitudinale,
le moteur d'entraînement entraînant directement l'organe d'entraînement sans interposition d'un réducteur de vitesse ;
- au moins une station de support est enterrée ; et
- les cellules photovoltaïques sont sous forme d'une plaque disposée au-dessus d'au moins une station de support enterrée.

L'invention a également pour objet un procédé de transport de matériaux selon le contenu de la revendication 5.

D'autres caractéristiques et avantages de l'invention apparaîtront à la lecture de la description qui va suivre, donnée uniquement à titre d'exemple, et faite en se référant aux dessins annexés, dans lesquels :
[Fig 1] la Figure 1 est une vue partielle latérale d'un convoyeur à bande selon l'invention, et
[Fig 2] la Figure 2 est une vue en coupe du convoyeur à bande de la Figure 1.

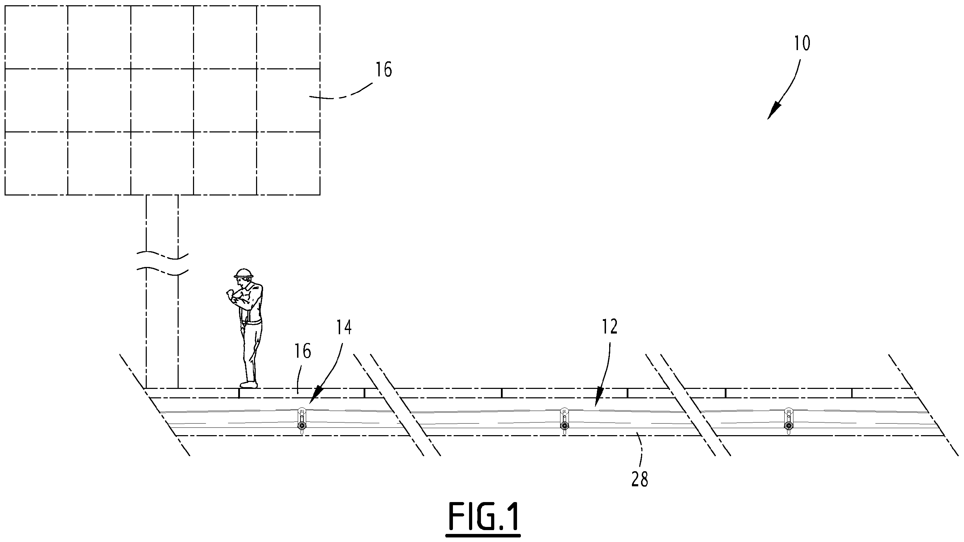

Un convoyeur à bande 10 est représenté sur la Figure 1. Le convoyeur à bande 10 est destiné au transport de produits divisés 11, comme par exemple du sable, des matériaux broyés issus de carrières, ou des matériaux issus d'un chantier d'excavation d'un tunnel.

Le convoyeur à bande 10 comporte une bande transporteuse 12 configurée pour se déplacer suivant une direction longitudinale.

Le convoyeur à bande 10 comporte également des rouleaux de retournement (non représentés sur les Figures).

Le convoyeur à bande 10 comporte également une pluralité de stations de support 14.

Le convoyeur 10 comporte également des cellules photovoltaïques 16 et/ou au moins une éolienne (non représentée sur les Figures).

La bande transporteuse 12 est en caoutchouc vulcanisé, éventuellement renforcée par des fibres. En variante, elle est en un autre matériau, par exemple en un matériau plastique.

La bande transporteuse 12 est refermée en boucle, et définit ainsi un brin aller 20 et un brin retour 22.

Le brin aller 20 est utilisé pour le transport des matériaux. Le brin retour 22 est dépourvu de matériau à transporter. En variante, le brin retour 22 est également utilisé pour le transport des matériaux.

Selon le mode de réalisation représenté sur les Figures, les brins aller et retour 20, 22 sont disposés côte à côte dans un plan sensiblement horizontal. En variante, le brin aller 20 est disposé au-dessus du brin retour 22.

La bande transporteuse 12 présente deux grandes faces 24, 26 opposées. Une première grande face 24 est destinée à recevoir des matériaux à transporter. Une deuxième grande face 26 est orientée vers la station de support 14 et est en contact avec celle-ci.

Les rouleaux de retournement sont agencés à deux extrémités longitudinales opposées du convoyeur à bande 10. Le brin aller 20 et le brin retour 22 s'étendent chacun d'un rouleau de retournement à l'autre.

Les stations de support 14 sont par exemple enterrées. Elles sont disposées dans une tranchée 28.

Selon un mode de réalisation, les cellules photovoltaïques 16 sont sous forme d'une plaque disposée au-dessus d'au moins une station de support 14 enterrée. Cette configuration permet d'obtenir une surface élevée de cellules photovoltaïques 16 en utilisant l'espace déjà occupé par les stations de support 14. Selon ce mode de réalisation, les cellules photovoltaïques 16 sont aptes à être déplacées, par exemple quand des opérations de maintenance doivent être effectuées sur une station de support 14.

En variante ou en complément, les cellules photovoltaïques 16 sont supportées par au moins un poteau.

Les stations de support 14 sont réparties longitudinalement le long de la bande transporteuse 12.

Par exemple, les stations de support 14 selon un mode de réalisation non revendiqué sont successivement séparées par une distance comprise entre 1m et 50m, et égale avantageusement à 10m. On entend par stations de support successives, deux stations de support qui sont voisines l'une de l'autre quand on suit la bande transporteuse longitudinalement.

Les stations de support 14 sont configurées pour soutenir la bande transporteuse 12 par sa deuxième grande face 26.

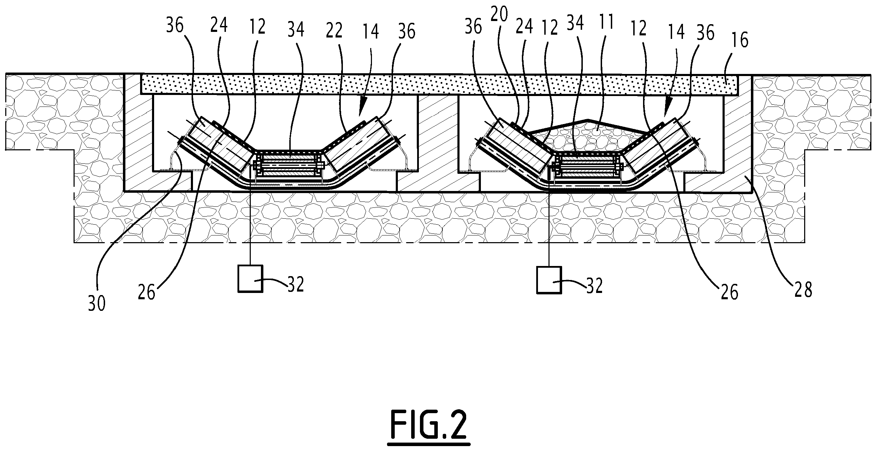

Comme visible sur la Figure 2, chaque station de support 14 comprend un châssis 30. Le châssis 30 est typiquement rigidement fixé à la tranchée 28 ou au sol.

Au moins une station de support 14 comprend un moteur d'entraînement 32 et un organe d'entraînement 34 de la bande transporteuse 12. Selon le mode de réalisation représenté sur les Figures, chaque station de support 14 comprend un moteur d'entraînement 32 et un organe d'entraînement 34 de la bande transporteuse 12. En variante, au moins une station de support 14 sur quatre, avantageusement une sur six, plus avantageusement une sur huit comprend un moteur d'entraînement 32 et un organe d'entraînement 34 de la bande transporteuse 12.

Selon le mode de réalisation représenté sur les Figures, les stations de support 14 équipées d'un moteur d'entraînement 32 et d'un organe d'entraînement de la bande 34 sont successivement séparées par une distance comprise entre 1m et 15m, de préférence entre 3m et 7m.

Selon un autre mode de réalisation, non représenté, les stations de support 14 équipées d'un moteur d'entraînement 32 et d'un organe d'entraînement de la bande 34 sont regroupées en ensembles, chaque ensemble comprenant entre deux et quinze stations de support 14 motorisées, de préférence entre deux et dix stations de support 14 motorisées, encore de préférence entre quatre et huit stations de support 14 motorisées. Chaque ensemble est avantageusement monté en haut d'un pylône, comme décrit dans la demande FR0850902, au nom du présent déposant. Les ensembles de stations de support 14 motorisées selon un mode de réalisation non revendiqué sont successivement séparés par une distance comprise entre 15m et 200m, de préférence comprise entre 30m et 100m.

Ces stations de support 14 motorisées sont différentes des stations de retournement de la bande, situées aux deux extrémités opposées du convoyeur.

Typiquement, les stations de retournement sont elles aussi motorisées. Lorsque les stations de retournement sont en panne, la convoyeur à bande 10 peut continuer à transporter des matériaux grâce à la présence de moteur(s) d'entraînement 32 sur la ou les stations de support 14. En variante, les stations de retournement ne sont pas motorisées.

Chaque station de support 14 comprend également au moins un organe de support 36 configuré pour supporter la bande transporteuse 12 sans être entraîné par le moteur d'entraînement 32.

De préférence, chaque station de support 14 comprend en outre un variateur de vitesse (non représenté sur les Figures), agencé pour contrôler la vitesse de rotation du moteur d'entraînement 32 dans une plage prédéterminée.

Le moteur d'entraînement 32 est configuré pour entraîner la bande transporteuse 12 suivant la direction longitudinale par rapport aux stations de support 14.

Le moteur d'entraînement 32 est alimenté en énergie par des cellules photovoltaïques 16 et/ou au moins une éolienne. En variante, le moteur d'entraînement 32 est alimenté par une source d'énergie autre que les cellules photovoltaïques ou éolienne, par exemple un réseau électrique classique.

Le moteur d'entraînement 32 présente une puissance électrique modérée, comprise entre 0,1 et 10 kW, et valant par exemple 1,1 kW.

Le moteur d'entraînement 32 entraîne l'organe d'entraînement 34 directement, sans interposition d'un réducteur de vitesse. En d'autres termes, la vitesse de rotation de l'arbre de sortie du moteur d'entraînement 32 et la vitesse de rotation de l'organe d'entraînement 34 sont égales.

L'organe d'entraînement 34 est entraîné en rotation par le moteur d'entraînement 32. L'organe d'entraînement 34 a par exemple un axe de rotation horizontal.

L'organe d'entraînement 34 est en contact direct avec la bande transporteuse 12 de sorte à entraîner le déplacement de la bande transporteuse 12 suivant la direction longitudinale.

L'organe d'entraînement 34 est par exemple un rouleau, comme représenté sur les Figures. Le diamètre de l'organe d'entraînement 34 est compris entre 5 et 50 cm, de préférence entre 8 et 20 cm, et vaut environ 15 cm. La vitesse de déplacement linéaire de la bande transporteuse 12 est comprise donc entre 0.1 et 20 m/s, de préférence entre 2 et 6 m/s, et vaut par exemple 4 m/s.

L'organe d'entraînement 34 roule contre la bande transporteuse 12, le coefficient de frottement entre l'organe d'entraînement 34 et la bande transporteuse 12 étant suffisamment élevé pour que le couple transmis par le moteur d'entraînement 32 à l'organe d'entraînement 34 soit transmis à son tour de cet organe d'entraînement 34 à la bande transporteuse 12.

Selon les modes de réalisation représentés sur les Figures, chaque station de support 14 comprend deux organes de support 36 disposés de part et d'autre de l'organe d'entraînement 34.

Les organes de support 36 chacun présentent un axe de rotation incliné par rapport à l'axe de rotation de l'organe d'entraînement 34. Les organes de support 36 sont aptes à maintenir la position de la bande transporteuse 12 entre eux tout en permettant son déplacement suivant la direction longitudinale.

L'organe de support 36 est par exemple un rouleau.

Le variateur de vitesse est utilisé pour faire varier la vitesse nominale des moteurs d'entraînement 32, en fonction de la vitesse linéaire de déplacement souhaitée pour la bande transporteuse 12.

Les cellules photovoltaïques 16 et l'éolienne dans l'invention sont classiques et connues par l'homme du métier.

Lors des transports de matériaux par un convoyeur à bande 10 décrit ci-dessus, les moteurs d'entraînement 32 entraînent les organes d'entraînement 34 en rotation autour des axes de rotation de ceux-ci. Les organes d'entraînement 34 entraînent la bande transporteuse 12 suivant la direction longitudinale par rapport aux stations de support 14, ce qui permet aux matériaux disposés sur la première grande face 24 de se déplacer suivant la direction longitudinale.

Grâce à l'invention décrite ci-dessus, lorsqu'un moteur d'entraînement 32 est en panne, il n'est pas obligatoire d'arrêter l'opération du convoyeur à bande 10. Les autres moteurs d'entraînement 32 fonctionnels assurent un bon fonctionnement de la bande transporteuse 12.

De plus, la puissance de chaque moteur d'entraînement 32 est sensiblement réduite. En effet, les moteurs d'entraînement 32 étant répartis sur toute la longueur de la bande transporteuse 12, chaque moteur d'entraînement 32 de la présente invention ne nécessite qu'une puissance faible. Pour cette raison, la tension dans la bande transporteuse 12 est sensiblement réduite. Du fait que la bande transporteuse 12 est entraînée par plusieurs organes d'entraînement 34, l'effort d'entraînement est réparti dans toute la longueur de la bande transporteuse 12, ce qui permet d'éliminer les zones de très fortes tensions.

Selon une application particulièrement avantageuse de l'invention, le convoyeur à bande comporte une pluralité de stations de support 14 comprenant chacune un moteur d'entraînement 32 et un organe d'entraînement 34, réparties le long de la bande transporteuse 12. De préférence, les stations de support 14 motorisées sont réparties de manière régulière le long de la bande transporteuse.

Un tel agencement des stations de support 14 permet de réduire la tension dans la bande transporteuse 12 et également de réduire la puissance nécessaire à chaque moteur d'entraînement 32 pour entraîner la bande transporteuse 12.

Ainsi, chaque moteur d'entraînement 32 ne nécessitant qu'une puissance faible, il est possible de les alimenter en énergie par les cellules photovoltaïques 16 et/ou au moins une éolienne et ainsi d'éviter d'installer, le long de la bande transporteuse 12, un système imposant et complexe de distribution d'énergie électrique, par exemple, à partir d'un réseau électrique classique.

Les stations de support 14 équipées d'un moteur d'entraînement 32 et d'un organe d'entraînement de la bande 34 sont successivement séparées par une distance comprise entre 1m et 15m, de préférence entre 3m et 7m, comme décrit plus haut.

Alternativement, les stations de support 14 selon un mode de réalisation non revendiqué d'un moteur d'entraînement 32 et d'un organe d'entraînement de la bande 34 sont regroupées en ensembles, et les ensembles de stations de support 14 motorisées sont successivement séparés par une distance comprise entre 15m et 200m, de préférence comprise entre 30m et 100m, comme décrit plus haut.

Dans les deux cas, le convoyeur à bande ne comporte que des stations de support motorisées. En variante, des stations de support non motorisées sont disposées entre les stations de support motorisées.

## Revendications

1. Convoyeur à bande (10), comportant :
- une bande transporteuse (12) configurée pour se déplacer suivant une direction longitudinale, la bande transporteuse (12) présentant deux grandes faces (24, 26), et
- une pluralité de stations de support (14) réparties longitudinalement le long de la bande transporteuse (12), les stations de support (14) étant configurées pour soutenir la bande transporteuse (12) par une des grandes faces (26),
au moins une station de support (14) comprenant un moteur d'entraînement (32) configuré pour entraîner la bande transporteuse (12) suivant la direction longitudinale par rapport aux stations de support (14),
**caractérisé en ce que** le moteur d'entraînement (32) étant alimenté en énergie par des cellules photovoltaïques (16) et/ou au moins une éolienne, les stations de support (14) équipées d'un moteur d'entraînement (32) étant successivement séparées par une distance comprise entre 1 m et 15 m.

2. Convoyeur à bande (10) selon l'une quelconque des revendications précédentes, dans lequel au moins une station de support (14) comprend au moins un organe d'entraînement (34) de la bande transporteuse (12), par exemple un rouleau, l'organe d'entraînement (34) étant entraîné en rotation par le moteur d'entraînement (32) et étant en contact direct avec la bande transporteuse (12) de sorte à entraîner le déplacement de la bande transporteuse (12) suivant la direction longitudinale,
le moteur d'entraînement (32) entraînant directement l'organe d'entraînement (34) sans interposition d'un réducteur de vitesse.

3. Convoyeur à bande (10) selon l'une quelconque des revendications précédentes, dans lequel au moins une station de support (14) est enterrée.

4. Convoyeur à bande (10) selon la revendication 3, dans lequel les cellules photovoltaïques (16) sont sous forme d'une plaque disposée au-dessus d'au moins une station de support (14) enterrée.

5. Procédé de transport de matériaux par un convoyeur à bande (10) comportant :
- une bande transporteuse (12) configurée pour se déplacer suivant une direction longitudinale, la bande transporteuse (12) présentant deux grandes faces (24, 26), et
- une pluralité de stations de support (14) réparties longitudinalement le long de la bande transporteuse (12), les stations de support (14) étant configurées pour soutenir la bande transporteuse (12) par une des grandes faces (26),
le procédé comportant l'entraînement de la bande transporteuse (12) suivant une direction longitudinale par rapport aux stations de support (14) par au moins un moteur d'entraînement (32), au moins une station de support (14) étant équipée du ou d'un desdits moteurs d'entraînement (32), le moteur d'entraînement (32) étant alimenté en énergie par des cellules photovoltaïques (16) et/ou au moins une éolienne, les stations de support (14) équipées d'un moteur d'entraînement (32) étant successivement séparées par une distance comprise entre 1 m et 15 m.

## Patentansprüche

1. Bandförderer (10), umfassend:
- ein Förderband (12), das konfiguriert ist, um sich in eine Längsrichtung zu bewegen, wobei das Förderband (12) zwei große Seiten (24, 26) aufweist, und
- eine Vielzahl von Trägerstationen (14), die in Längsrichtung entlang des Förderbands (12) verteilt sind, wobei die Trägerstationen (14) konfiguriert sind, um das Förderband (12) an einer der großen Seiten (26) zu tragen,
mindestens eine Trägerstation (14) umfassend einen Antriebsmotor (32), der konfiguriert ist, um das Förderband (12) in der Längsrichtung in Bezug auf die Trägerstationen (14) anzutreiben,
**dadurch gekennzeichnet, dass** der Antriebsmotor (32) durch photovoltaische Zellen (16) und/oder mindestens eine Windkraftanlage mit Energie versorgt wird, wobei die mit einem Antriebsmotor (32) ausgestatteten Trägerstationen (14) nacheinander durch einen Abstand zwischen 1 m und 15 m voneinander getrennt sind.

2. Bandförderer (10) nach einem der vorherigen Ansprüche, wobei mindestens eine Trägerstation (14) mindestens ein Antriebsorgan (34) für das Förderband (12), beispielsweise eine Rolle, umfasst, wobei das Antriebsorgan (34) durch den Antriebsmotor (32) in Drehung versetzt wird und in direktem Kontakt mit dem Förderband (12) ist, sodass es die Bewegung des Förderbands (12) in Längsrichtung bewirkt,
wobei der Antriebsmotor (32) das Antriebsorgan (34) ohne Zwischenschaltung eines Untersetzungsgetriebes direkt antreibt.

3. Bandförderer (10) nach einem der vorherigen Ansprüche, wobei mindestens eine Trägerstation (14) unterirdisch ist.

4. Bandförderer (10) nach Anspruch 3, wobei die photovoltaischen Zellen (16) in Form einer Platte sind, die über mindestens einer unterirdischen Trägerstation (14) angeordnet ist.

5. Verfahren zum Transport von Materialien durch einen Bandförderer (10), umfassend:
- ein Förderband (12), das konfiguriert ist, um sich in eine Längsrichtung zu bewegen, wobei das Förderband (12) zwei große Seiten (24, 26) aufweist, und
- eine Vielzahl von Trägerstationen (14), die in Längsrichtung entlang des Förderbands (12) verteilt sind, wobei die Trägerstationen (14) konfiguriert sind, um das Förderband (12) an einer der großen Seiten (26) zu tragen,
das Verfahren umfassend das Antreiben des Förderbands (12) in eine Längsrichtung in Bezug auf die Trägerstationen (14) durch mindestens einen Antriebsmotor (32), wobei mindestens eine Trägerstation (14) mit dem oder einem der Antriebsmotoren (32) ausgestattet ist, wobei der Antriebsmotor (32) durch photovoltaische Zellen (16) und/oder mindestens eine Windkraftanlage mit Energie versorgt wird, wobei die mit einem Antriebsmotor (32) ausgestatteten Trägerstationen (14) nacheinander durch einen Abstand zwischen 1 m und 15 m voneinander getrennt sind.

## Claims

1. Belt conveyor (10), comprising:
- a conveyor belt (12) configured to move in a longitudinal direction, the conveyor belt (12) having two large faces (24, 26), and
- a plurality of support stations (14) distributed longitudinally along the conveyor belt (12), the support stations (14) being configured to support the conveyor belt (12) by one of the large faces (26),
at least one support station (14) comprising a drive motor (32) configured to drive the conveyor belt (12) in the longitudinal direction relative to the support stations (14),
**characterized in that** the drive motor (32) is supplied with energy by photovoltaic cells (16) and/or at least one wind turbine, the support stations (14) equipped with a drive motor (32) being successively separated by a distance between 1m and 15m.

2. Belt conveyor (10) according to any one of the preceding claims, in which at least one support station (14) comprises at least one drive member (34) for the conveyor belt (12), for example a roller, the drive member (34) being driven in rotation by the drive motor (32) and being in direct contact with the conveyor belt (12), so as to cause the displacement of the conveyor belt (12) in the longitudinal direction,
the drive motor (32) directly driving the drive member (34) without the interposition of a speed reducer.

3. Belt conveyor (10) according to any one of the preceding claims, wherein at least one support station (14) is buried.

4. Belt conveyor (10) according to claim 3, wherein the photovoltaic cells (16) are in the form of a plate arranged above at least one buried support station (14).

5. A method of transporting materials by a belt conveyor (10) comprising:
- a conveyor belt (12) configured to move in a longitudinal direction, the conveyor belt (12) having two large faces (24, 26), and
- a plurality of support stations (14) distributed longitudinally along the conveyor belt (12), the support stations (14) being configured to support the conveyor belt (12) by one of the large faces (26),
the method comprising driving the conveyor belt (12) in a longitudinal direction relative to the support stations (14) by at least one drive motor (32), wherein at least one support station (14) is equipped with the, or one of, said drive motors (32), the drive motor (32) being supplied with energy by photovoltaic cells (16) and/or at least one wind turbine, the support stations (14) equipped with a drive motor (32) being successively separated by a distance between 1m and 15m.
